# FASCICULE DE BREVET EUROPEEN

(11) **EP 3 877 666 B1**
(45) Date de publication et mention de la délivrance du brevet: **07.09.2022**
(21) Numéro de dépôt: 19817397.3
(22) Date de dépôt: 06.11.2019
(51) Int. Cl.: F16D 65/00

(54) **SYSTÈME ET PROCÉDÉ D'ASPIRATION DE POUSSIÈRES DE FREIN OPTIMISÉS**
OPTIMIERTES BREMSSTAUBSAUGSYSTEM UND -VERFAHREN
OPTIMIZED BRAKE DUST SUCTION SYSTEM AND METHOD

(30) Priorité: 08.11.2018 FR 1860308
(43) Date de publication de la demande: 15.09.2021
(73) Titulaire: Tallano Technologie, 92100 Boulogne Billancourt (FR)
(72) Inventeur: ADAMCZAK, Loïc, 92100 BOULOGNE BILLANCOURT (FR); ROCCA SERRA, Christophe, 92100 BOULOGNE-BILLANCOURT (FR); LE BOULAIRE, Thibaut, 92100 BOULOGNE BILLANCOURT (FR); MAISTRE, Adrien, 92100 BOULOGNE BILLANCOURT (FR)
(74) Mandataire: Plasseraud IP
(86) Numéro de dépôt international: PCT/FR2019/052633
(87) Numéro de publication internationale: WO 2020/094982

(56) Documents cités:
- DE-A1- 4 240 873
- US-A1- 2017 248 180

## Description

### Domaine technique

L'invention se rapporte aux systèmes d'aspiration des particules de freinage dans des systèmes de freinage à friction. De tels systèmes de freinage à friction peuvent équiper des véhicules routiers ou ferroviaires. De tels systèmes de freinage à friction peuvent aussi équiper des machines stationnaires à rotor comme des éoliennes ou des machines industrielles.

### Contexte et Art Antérieur

Dans de tels systèmes, comme par exemple décrit dans le document DE4240873, il est prévu une turbine d'aspiration et un filtre de collecte des particules. Les particules émanant de l'abrasion sont ainsi progressivement accumulées dans le filtre de collecte. Il s'ensuit un colmatage progressif du filtre. Ce colmatage progressif nécessite une puissance d'aspiration dimensionnée pour le cas où le filtre produit une perte en ligne élevée ceci afin de continuer à collecter correctement les particules mêmes dans le cas où le filtre présente un taux de colmatage élevé.

À l'inverse, à l'état neuf du filtre, avec très peu de perte en ligne pneumatique, la puissance d'aspiration peut s'avérer surdimensionnée et le bruit concomitant généré par la turbine tournant à vitesse élevée peut s'avérer gênant.

La présente invention a pour objet de proposer une solution améliorée au regard du colmatage progressif du filtre.

### Résumé de l'invention

A cet effet, il est proposé un système d'aspiration des particules de freinage d'un système de freinage à friction d'un véhicule, le système d'aspiration comprenant:
au moins une source de dépression (par exemple une turbine ou un autre moyen), au moins une bouche d'aspiration, reliée par un circuit pneumatique à la source de dépression, une unité de commande configurée pour commander la source de dépression, caractérisé en ce que le système d'aspiration comprend en outre un dispositif de détermination des conditions aérauliques courantes prévalant dans le circuit pneumatique, et en ce que l'unité de commande pilote la source de dépression de manière à ce que les conditions aérauliques courantes dans le circuit pneumatique atteignent ou tendent à rejoindre au moins une valeur de conditions aérauliques de consigne.

Sous le terme « *valeur de conditions aérauliques de consigne»,* il faut comprendre soit une valeur prédéterminée, sans exclure toutefois que cette consigne soit une fonction du temps ou de conditions opérationnelles (cf plus loin).

Sous le terme « *dispositif de détermination des conditions aérauliques courantes »,* il faut comprendre soit un capteur de pression, soit un capteur de débit, soit un organe de mesure électrique mesurant une grandeur représentative d'au moins une condition aéraulique d'intérêt.

A propos du « circuit pneumatique qui relie la bouche d'aspiration à la source de dépression », il faut comprendre une conduite fluide qui va la bouche d'aspiration à la turbine soit directement soit en passant par un filtre. Un premier conduit se situe en aval de la bouche d'aspiration sur le chemin des particules qui va de la bouche d'aspiration vers le filtre, la turbine peut être agencée en aval du filtre ou inversement. Le premier conduit est tout ou partie en dépression, sans exclure qu'une partie en aval de la turbine soit en surpression (filtre en aval de la turbine).

Grâce à ces dispositions, en asservissant le pilotage sur des conditions aérauliques de consigne souhaitées, on obtient une efficacité de l'aspiration substantiellement indépendante du niveau de colmatage du filtre. Accessoirement, lorsque le filtre est neuf, la puissance nécessaire est relativement réduite et dans le cas d'utilisation d'une turbine, sa vitesse de rotation plutôt basse, ce qui permet de garantir un niveau de bruit très modéré. Au fur et à mesure que les particules sont collectées et que le niveau de colmatage augmente, le système est prévu pour fournir une puissance d'aspiration plus importante pour arriver aux mêmes conditions aérauliques de consigne souhaitées.

En outre, l'utilisation d'un tel capteur des conditions aérauliques permet de fiabiliser le fonctionnement et l'efficacité du système d'aspiration ainsi que de proposer certaines fonctions de diagnostic d'un cas anormal comme par exemple le cas où une tubulure est débranchée.

En outre, dans le cas d'une turbine à moteur électrique spécifique, le pilotage permet d'obtenir une consommation électrique la plus basse possible pour la fonction, au juste nécessaire.

Par « source de dépression », il faut comprendre ici soit une turbine spécifique à la fonction d'aspiration de particules de freinage, soit une source de dépression préexistante sur le véhicule que l'on met à profit de manière contrôlée pour aspirer les particules vers le filtre de collecte.

Dans le cas d'une mesure de pression, le dispositif de détermination des conditions aérauliques courantes prévalant dans le circuit pneumatique est un capteur de pression pour mesurer la pression régnant dans le circuit pneumatique et la pression représente les conditions aérauliques courantes, et l'unité de commande pilote la source de dépression de manière à ce que la pression dans le circuit pneumatique atteigne ou tende à rejoindre une valeur de dépression de consigne (DPR).

Grâce à ces dispositions, on obtient une efficacité de l'aspiration substantiellement indépendante du niveau de colmatage du filtre. Lorsque le filtre est neuf, la puissance nécessaire est relativement réduite et dans le cas d'utilisation d'une turbine, sa vitesse de rotation plutôt basse, ce qui permet de garantir un niveau de bruit très modéré. Au fur et à mesure que les particules sont collectées et que le niveau de colmatage augmente, le système est prévu pour fournir une puissance d'aspiration plus importante pour arriver à la même valeur de dépression de consigne souhaitée dans le circuit pneumatique.

Outre la solution d'un capteur de pression, on peut utiliser un capteur de débit pour mesurer des conditions aérauliques d'intérêt dans le circuit pneumatique, ou encore un organe de mesure électrique mesurant une grandeur représentative d'au moins une condition aéraulique d'intérêt.

Sous le terme « valeur de dépression de consigne», il faut comprendre soit une valeur prédéterminée, sans exclure toutefois que cette consigne de dépression soit une fonction du temps ou de conditions opérationnelles.

Dans divers modes de réalisation de l'invention concernant le système, on peut éventuellement avoir recours en outre à l'une et/ou à l'autre des dispositions suivantes, prises isolément ou en combinaison.

Selon une option préférentielle, la source de dépression est formée par une turbine entrainée par un moteur électrique. Moyennant quoi, il est prévu que l'unité de commande pilote la vitesse de rotation du moteur électrique pour ainsi piloter en puissance la dépression créée par la turbine. S'agissant d'un moteur électrique piloté en tension continue, 12V, 24V ou 72V par exemple, on peut prévoir que la logique de commande fasse appel à un signal de commande modulé en PWM.

Selon une option alternative, la source de dépression est formée par une source de dépression préexistante sur le véhicule, notamment pour le cas du domaine automobile une source de dépression induite par le fonctionnement du moteur du véhicule par exemple en dérivation de l'admission d'air, ou bien en autre exemple par l'utilisation d'un effet Venturi sur un flux de gaz sortant par exemple les gaz d'échappement. Pour le cas du domaine ferroviaire, la source de dépression peut être dérivée de l'équipement pneumatique de freinage ou d'un autre équipement auxiliaire du véhicule ferroviaire.

Selon une option, le capteur de pression est agencé de manière adjacente ou intégrée au filtre. Moyennant quoi, on propose une solution mécatronique compacte et un montage simplifié.

Selon une option, le système peut comprendre au moins un filtre pour collecter les particules aspirées.

Selon une option, le système comprend un filtre et une turbine centralisés, reliés à quatre ou plus bouches d'aspiration. Moyennant quoi, le coût de la solution complète est optimisé. Il est possible de prévoir un seul capteur de pression (resp un seul capteur de conditions aérauliques) pour réaliser la fonction complète.

Selon une option, le système comprend un filtre et une turbine décentralisés, à savoir pour chaque bouche d'aspiration ou couple de bouches d'aspiration. Moyennant quoi, on adapte la puissance de la source de dépression, en particulier la vitesse de rotation de la turbine, spécifiquement pour chacun des moyens de freinage. On peut même avoir un filtre, une turbine et une bouche d'aspiration par plaquette, ou par côté de disque, comme par exemple dans le domaine ferroviaire.

Selon une option, l'unité de commande est configurée pour détecter un niveau de colmatage prédéterminé du filtre, et pour transmettre un message à destination d'un utilisateur. Grâce à quoi, l'utilisateur en question, qu'il soit le propriétaire, le conducteur, ou le responsable de maintenance du véhicule en question, peut être informé de la nécessité de remplacer le filtre. En pratique, l'unité de commande peut transmettre un message vers un tableau de bord du véhicule ou vers un serveur distant en charge de la gestion de la maintenance du véhicule. On remarque que lorsque le moteur atteint une vitesse maximale, l'indicateur de colmatage sera activé lorsque la dépression aura atteint un niveau minimal qui n'est pas la valeur de consigne recherchée. Par ailleurs, on note ici que le niveau sonore émis par la turbine peut également servir d'indicateur de fin de vie.

Selon une option, la valeur de dépression de consigne prédéterminée est choisie dans une plage de 20 à 40 millibars en dessous de la pression ambiante. Avantageusement, il s'agit d'une plage optimale pour capter efficacement les particules de freinage tout en conservant un dimensionnement raisonnable et peu couteux et des dimensions modérées pour les éléments du système.

La présente invention concerne aussi un procédé pour piloter un système d'aspiration des particules de freinage à friction d'un système de freinage d'un véhicule, le système d'aspiration comprenant:
au moins une source de dépression (une turbine ou autre), au moins une bouche d'aspiration (83), reliée par un circuit pneumatique (3,30) à la source de dépression, une unité de commande (6), un dispositif de détermination des conditions aérauliques courantes prévalant dans le circuit pneumatique,
l'unité de commande est configurée pour :
   **a-** commander la source de dépression (par exemple la rotation de la turbine), en fonction de conditions d'activation prédéterminées,
   **b-** mesurer des conditions aérauliques courantes prévalant dans le circuit pneumatique,
   **c-** déterminer une différence entre conditions aérauliques courantes et au moins une valeur de conditions aérauliques de consigne,
   **d-** ajuster les signaux de commande utilisés pour ajuster en puissance la source de pression, ou faire tourner la turbine en fonction de ladite différence.

Dans le cas type d'une mesure de type pression, il est proposé un procédé pour piloter un système d'aspiration des particules de freinage à friction d'un système de freinage d'un véhicule, le système d'aspiration comprenant:
au moins une source de dépression (une turbine ou autre), au moins une bouche d'aspiration (83) reliée par un circuit pneumatique (3,30) à la source de dépression, une unité de commande (6), un capteur de pression (22),
l'unité de commande est configurée pour :
   **a-** commander la source de dépression (par exemple la rotation de la turbine), en fonction de conditions d'activation prédéterminées,
   **b-** mesurer la pression dans le circuit pneumatique, au moyen du capteur de pression,
   **c-** déterminer une différence entre la pression courante et une valeur de dépression de consigne,
   **d-** ajuster les signaux de commande utilisés pour ajuster en puissance la source de pression, ou faire tourner la turbine en fonction de ladite différence.

Dans divers modes de réalisation de l'invention concernant le procédé, on peut éventuellement avoir recours en outre à l'une et/ou à l'autre des dispositions suivantes, prises isolément ou en combinaison.

Selon une option, l'unité de commande est en outre configurée pour détecter un niveau de colmatage prédéterminé du filtre, quand la consigne de commande de la source de dépression dépasse un seuil prédéterminé pour que les conditions aérauliques courantes atteignent la valeur de conditions aérauliques de consigne.

Dans le cas type d'un capteur de pression, l'unité de commande est configurée pour détecter un niveau de colmatage prédéterminé du filtre quand la consigne de commande de la source de dépression dépasse un seuil prédéterminé pour que la pression atteigne la valeur de dépression de consigne prédéterminée, ou que la valeur de consigne n'est pas atteinte malgré une commande en puissance maximale de la source de dépression.

Dans le cas type d'un capteur de pression et d'une turbine à commande électrique, l'unité de commande est en outre configurée pour détecter un niveau de colmatage prédéterminé du filtre quand la consigne de commande de rotation de la turbine dépasse un seuil prédéterminé pour que la pression atteigne la valeur de dépression de consigne prédéterminée.

Selon une option, l'unité de commande est en outre configurée pour transmettre un message à destination d'un utilisateur, lorsqu'une condition de colmatage est déterminée. Ainsi le propriétaire, le conducteur, ou le responsable de maintenance du véhicule en question, peut être informé de la nécessité de remplacer le filtre.

Selon une option, la valeur de consigne (dépression ou plus généralement conditions aérauliques) n'est pas une valeur constante mais peut être déterminée en fonction de diverses conditions opérationnelles (température, humidité, vitesse du véhicule). De plus la valeur de consigne peut être fonction temporelle de la phase de freinage. Ainsi, il est possible d'affiner le pilotage et l'asservissement de la dépression au juste nécessaire.

Selon une option, la source de dépression étant une turbine, il est prévu que lorsque les signaux de commande utilisés pour faire tourner la turbine dépassent une valeur prédéterminée, le niveau sonore émis par la rotation de la turbine dépasse un certain seuil audible, et peut ainsi être perçu par un utilisateur. Autrement dit, le sifflement de la turbine est une alerte sonore qui forme un indice incitant l'utilisateur à remplacer le filtre.

### Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- La figure 1 représente une vue de profil d'un exemple d'un organe de freinage à friction,
- La figure 2 représente un diagramme de principe d'un système d'aspiration des particules de freinage localisé pour une roue ou un essieu,
- La figure 3 représente un diagramme de principe d'un système d'aspiration des particules de freinage centralisé sur plusieurs roues ou essieux,
- La figure 4 représente un schéma de principe fonctionnel d'un système d'aspiration des particules de freinage,
- La figure 5 donne une illustration physique des composants du système d'aspiration des particules de freinage,
- La figure 6 représente des chronogrammes illustrant au moins une fonctionnalité du système,
- La figure 7 représente des chronogrammes illustrant au moins une fonctionnalité du système,
- La figure 8 représente un chronogramme illustrant une variante de fonctionnalité du système,
- La figure 9 représente une variante de diagramme de principe d'un système d'aspiration des particules de freinage.

### Description détaillée

Sur les différentes figures, les mêmes références désignent des éléments identiques ou similaires. Pour des raisons de clarté de l'exposé, certains éléments ne sont pas nécessairement représentés à l'échelle.

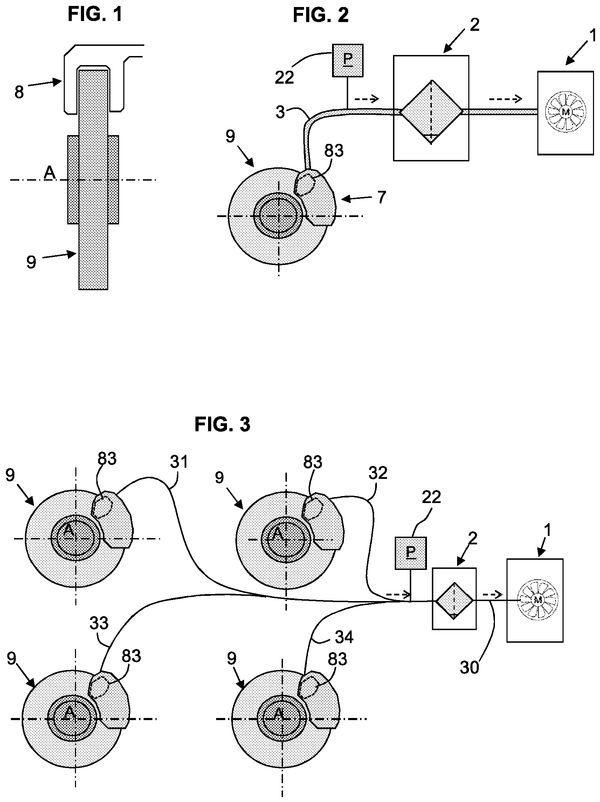

La figure 1 représente schématiquement un organe de freinage à friction. Dans le cas illustré, on a représenté un disque de frein **9** destiné à être rendu solidaire en rotation d'une roue (voire un essieu pour du matériel ferroviaire). Le disque **9** tourne autour de l'axe **A.** Selon l'art connu, on dispose un étrier **7** à cheval sur le disque et monté sur un support d'étrier. De plus, l'étrier comprend un piston configuré pour agir sur des patins de friction afin de prendre en sandwich le disque. Les patins de friction (non représentés) sont montés sur des plaquettes ou des semelles, tout ceci étant connu par ailleurs en soi et non décrit ici en détail.

Bien que l'on ait représenté un schéma de frein à disque, la présente invention convient également pour des freins à tambour, voire des systèmes de frein par patins appliqués directement sur la jante de roue.

À l'endroit des patins à friction, il est prévu un dispositif de captation **8** des particules qui s'en échappent. Plus particulièrement, on peut prévoir une bouche d'aspiration **83** pour chacun des patins à friction. On peut par exemple trouver un exemple dans le document FR3057040 du présent déposant, où les particules sont captées dans des rainures ménagées dans le matériau de friction. La bouche d'aspiration peut être formée par la (ou les) rainure(s) elle-même raccordée à un trou traversant dans la semelle de la garniture de friction et en communication avec un passage aval (vers le filtre).

La bouche d'aspiration **83** est reliée à une source de dépression par un circuit pneumatique. Le circuit pneumatique peut comprendre un premier conduit **3** et un deuxième conduit **30.**

D'une façon générale, la bouche d'aspiration peut se trouver sur la trajectoire des particules à leur sortie de l'interface entre le patin et l'organe tournant (disque, tambour, jante..). C'est la dépression ou le débit créés à cet endroit qui contribue à une bonne captation.

Dans d'autres configurations, il peut être prévu un capotage auquel cas la bouche d'aspiration est formée par la sortie de l'espace recouvert par ledit capotage.

Il faut donc comprendre que la présente invention peut être appliquée quel que soit la configuration de la bouche d'aspiration **83.**

Typiquement pour une configuration de frein à disque, il y aura une bouche d'aspiration 83 de chaque côté du disque comme illustré à la figure 1.

La bouche d'aspiration (ou les bouches d'aspiration selon les cas) est reliée à un filtre **2** par une conduite fluide appelée ici premier conduit 3, comme ceci est exemplifié à la figure 2. Le premier conduit **3** peut être formé comme une tuyauterie sans exclure un passage sous forme de tunnel au travers d'une pièce (par exemple le corps de l'étrier). Le premier conduit peut présenter une longueur plus ou moins importante, cette longueur peut aller de quelques dizaines de centimètres, par exemple 50 cm, jusqu'à plusieurs mètres dans une configuration de filtrage centralisé comme il est illustré à la figure 3.

D'une façon générale, la liaison fluidique entre la bouche d'aspiration et le filtre 2 peut comprendre une ou plusieurs dérivations, des raccords en T, en Y etc. Le terme de circuit pneumatique peut également être utilisé pour désigner les conduites fluides/tuyau d'air.

La liaison fluidique entre la bouche d'aspiration et le filtre **2** peut comprendre des portions rigides et des portions de conduite souples.

On peut trouver différentes configurations entre les bouches d'aspiration, le filtre et la source de dépression : on peut avoir un filtre pour chaque bouche d'aspiration (configuration décentralisée au maximum), voire pour chaque paire de bouches d'aspiration (Fig 2), mais on peut aussi avoir un seul filtre pour une pluralité de paires de bouches d'aspiration (Fig 3) (configuration dite centralisée), voire un seul filtre pour l'ensemble de véhicule. Ce choix peut être dicté par le type de véhicule, la durée de vie nécessaire pour le filtre avant colmatage, les diverses contraintes d'implantation dans le véhicule, etc.

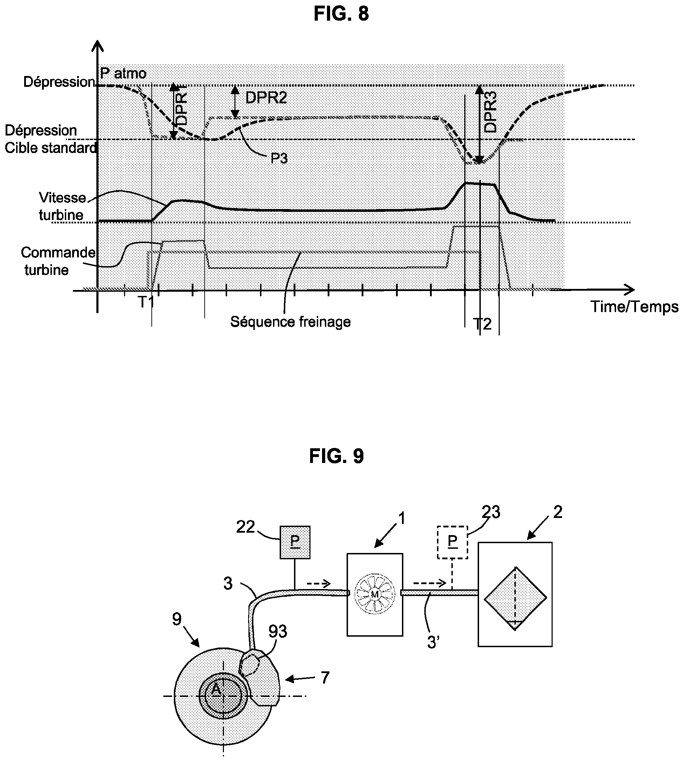

Sur les figures 2, 6 et 7, on a représenté une configuration en dépression, avec le filtre interposé entre le premier conduit **3** et la source de dépression **1** qui aspire les particules au travers du filtre que se trouve alors en dépression par rapport à la pression ambiante extérieure. Toutefois, dans une configuration représentée à la figure 9, la source de dépression (ici la turbine 1) peut être interposée entre le premier conduit 3 et le filtre, auquel cas la turbine aspire les particules puis la turbine les souffle dans le filtre via un conduit aval noté **3'.** Dans ce cas, le filtre 2 en surpression au lieu de dépression.

Le filtre **2** peut, dans un exemple type de réalisation, comprendre un média filtrant, de type papier ou autre, laissant passer l'air et piégeant les petites particules contenues dans le flux en provenance des bouches d'aspiration.

Le terme 'filtre' doit être compris ici largement, ce terme comprend des solutions de filtre centrifuge (type 'cyclone'), des solutions de filtre à technique de piégeage électromagnétique, des solutions de filtre à technique de piégeage électrostatique. Le terme 'filtre' inclut aussi une solution où les particules sont dirigées vers un filtre déjà existant comme le filtre à air habitacle ou vers le filtre du pot catalytique.

Le filtre à particules 2 est configuré pour filtrer de l'air provenant des bouches d'aspiration incluant des particules solides présentant des dimensions micrométriques ou millimétriques, c'est-à-dire laisser l'air traverser le média filtrant alors que les particules ne traversent pas le média filtrant et y sont piégées. Au fil du temps, la quantité de particules piégées dans le média filtrant augmente, donc le filtre 2 fonctionne par accumulation et le passage de l'air devient moins aisé à travers le média filtrant au fur et à mesure.

Dans l'exemple illustré, la source de dépression **1** est formée par une turbine d'aspiration **10** entraînée par un moteur électrique **11.**

Dans l'exemple illustré, la turbine avec son moteur électrique forme une entité distincte du filtre. Dans ces conditions, il est prévu une seconde conduite fluide pneumatique **30** pour relier la turbine au filtre.

Il faut noter qu'une configuration avec la turbine et le filtre dans une seule entité est également possible.

Selon une disposition avantageuse de la présente invention, il est prévu en outre un capteur de pression **22** configuré pour mesurer la pression régnant dans le premier conduit 3.

Le capteur de pression en question représente une solution parmi un ensemble de solutions qui permettent de déterminer les conditions aérauliques qui prévalent dans le premier conduit. Ainsi on peut généraliser le capteur de pression à une notion de dispositif de détermination des conditions aérauliques, qui montre une solution de capteurs de pression couvre également un capteur de débit d'air, un capteur mesurant la résistance à la rotation constatée sur le rotor de la turbine.

Sur le schéma de principe de la figure 2, le capteur de pression 22 est agencé sur le parcours du premier conduit 3 entre au moins une bouche d'aspiration et le filtre 2.

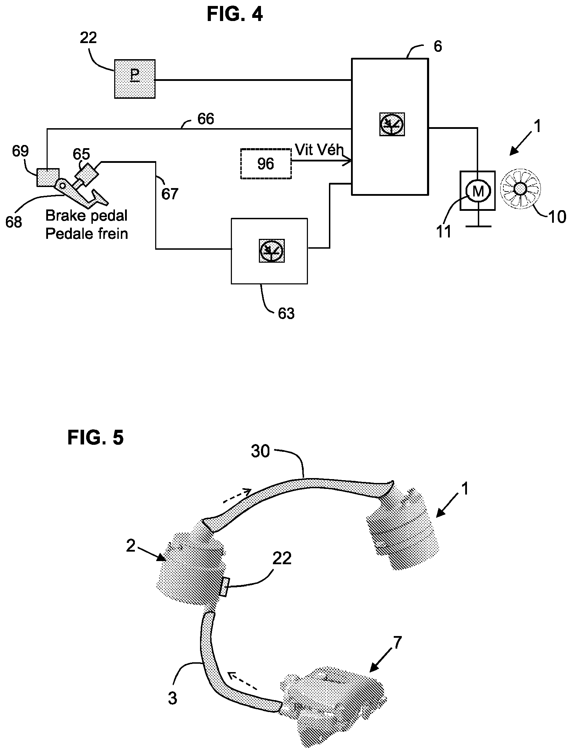

Toutefois dans une configuration alternative tout aussi préférée, le capteur de pression 22 est agencé de manière adjacente ou intégrée au filtre 2, comme illustré à la figure 5.

Le capteur de pression peut être de tout type technologique, à membrane, à capsule, tube de Pitot, etc.

Selon un exemple, on peut choisir un capteur MPX5700DP de la marque Freescale^{™}. Selon un exemple, on peut choisir un capteur piézo-résistif.

Dans la pratique, le capteur de pression 22 mesure une différence de pression entre la pression ambiante et la pression prévalant sur son entrée utile.

Le système d'aspiration comprend en outre une unité de commande **6** configurée pour piloter la turbine.

L'unité de commande 6 est une unité électronique capable de générer un signal de commande pour commander la vitesse du moteur qui entraîne la turbine selon une valeur quelconque entre la vitesse nulle et la vitesse maximale possible.

Selon un exemple, le moteur électrique est alimenté par une tension continue, on peut prévoir que la logique de commande fasse appel à un signal modulé PWM (modulation de largeur d'impulsion). La tension continue utilisée peut dépendre du domaine d'application du système d'aspiration des particules, par exemple 12 Volts sur des véhicules automobiles classiques, 24 Volts sur des véhicules poids-lourds ou industriels de type camions ou autocars, ou encore 72 Volts sur du matériel ferroviaire (tramway, train).

Il faut noter ici qu'en lieu et place d'une turbine d'aspiration, la source de dépression peut être préexistante sur le véhicule, notamment pour le cas du domaine automobile une source de dépression induite par le fonctionnement du moteur du véhicule par exemple en dérivation de l'admission d'air, ou bien en autre exemple par l'utilisation d'un effet Venturi sur un flux de gaz sortant par exemple les gaz d'échappement. Pour le cas du domaine ferroviaire, la source de dépression peut être dérivée de l'équipement pneumatique de freinage ou d'un autre équipement auxiliaire du véhicule ferroviaire en question.

Les inventeurs ont découvert que le système pouvait donner un fonctionnement optimal lorsque l'on faisait régner à l'intérieur du premier conduit 3 une valeur de dépression souhaitée. Partant de là, ils ont déterminé un fonctionnement d'intérêt consistant à obtenir une valeur de dépression de consigne dans le premier conduit, c'est-à-dire aussi à l'endroit où le capteur de pression mesure la pression y prévalant.

Selon une configuration avantageuse, la valeur de dépression de consigne prédéterminée **DPR** est choisie dans une plage de 20 à 40 millibars en dessous de la pression ambiante, autrement dit dans l'échelle des pressions absolues, la consigne de pression absolue dans le premier conduit peut être exprimée par **PC = Patmo** - **DPR,** Patmo étant la pression atmosphérique régnant au voisinage du système d'aspiration.

Comme il a été indiqué précédemment, le capteur de pression **22** mesurant une pression relative par rapport à la pression ambiante, l'unité de commande pilote **6** la source de dépression de manière à ce que la pression dans le premier conduit atteigne ou tende à rejoindre une valeur de dépression de consigne prédéterminée, c'est-à-dire de manière à ce que la dépression dans le conduit et dans la bouche d'aspiration soit égale à **DPR.** Il convient de noter ici que la consigne de dépression peut être une valeur prédéterminée fixe, mais comme il sera vu plus loin la consigne peut aussi être un paramètre de calibration, comporter plusieurs valeurs cibles selon la phase de la séquence de freinage, voire même une courbe en fonction du temps.

Comme visible à la figure 4, l'unité de commande **6** reçoit des informations, outre en provenance du capteur de pression 22, en provenance d'autres éléments présents à bord du véhicule notamment en provenance de l'actionneur de freinage qui pilote le freinage à friction ci-dessus mentionné. L'actionneur de freinage peut être une pédale ou un manipulateur selon le type de matériel ou véhicules concernés (automobile ferroviaire etc.).

Dans certaines configurations, il y a simplement un interrupteur binaire tout ou rien en interaction avec la pédale de frein **68.** Cet interrupteur peut délivrer une information **67** directement à l'unité de commande **6** du système d'aspiration ou bien via une unité de commande **63** de la fonction freinage par exemple celle qui gère la fonction ABS. Selon une autre configuration, il peut être prévu une information plus riche, de type analogique ou numérique, reflétant précisément la position courante de la pédale de frein ce qui permet à l'unité de commande **6** de connaître d'une part l'intensité de freinage et d'autre part de pouvoir agir très précocement dès le début de l'action de l'utilisateur ou du conducteur sur la pédale de frein. Dans ce cas, il est prévu un potentiomètre **69** analogique ou numérisé, qui délivre une information riche **66** à destination de l'unité de commande 6 du système d'aspiration.

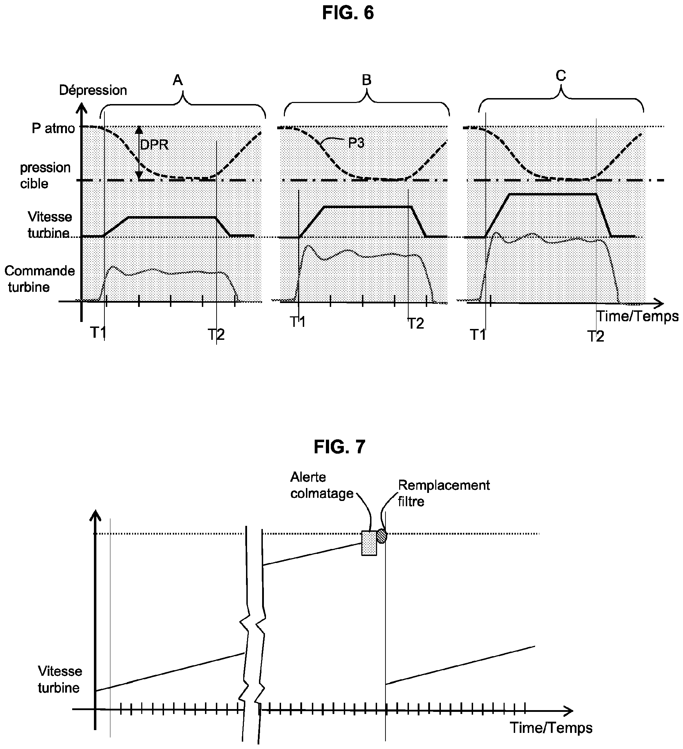

La figure 6 illustre à l'aide de trois portions de chronogramme, trois états/niveaux différents de colmatage du filtre.

La courbe dans la partie supérieure représente la pression notée P3 régnant à l'intérieur du premier conduit 3 c'est-à-dire substantiellement la pression d'aspiration appliquée à la bouche d'aspiration 83.

La courbe dans la partie inférieure du graphique représente la commande du moteur 11 de la turbine par exemple caractérisée par son courant moyen de commande.

La courbe située dans la partie intermédiaire représente la vitesse de rotation de la turbine.

**T1** repère le début de la séquence de freinage alors que **T2** repère la fin de la séquence de freinage.

On constate que lorsque le filtre est à l'état neuf, sur le chronogramme de gauche 'A', la pression cible c'est-à-dire Patmo - DPR est obtenue avec une vitesse de turbine faible et un courant de commande également faible.

Par comparaison, sur le chronogramme du milieu 'B', alors que le filtre a déjà été utilisé de manière substantielle, pour atteindre la même pression cible, c'est-à-dire Patmo - DPR, la vitesse de turbine est plus importante et le courant de commande est également plus important.

Par comparaison, sur le chronogramme de droite 'C', le filtre présente un niveau de colmatage assez important, et pour atteindre la même pression cible, c'est-à-dire Patmo - DPR, la vitesse de turbine est encore plus importante et le courant de commande est encore plus important.

Plus précisément, l'unité de commande 6 comprend une boucle d'automatisme (asservissement) qui cherche dès que les conditions d'activation de l'aspiration sont présentes, à ce que la pression dans le premier conduit atteigne dès que possible la pression cible Patmo - DPR.

Exprimée sous une autre forme, l'unité de commande met en œuvre un procédé comprenant au moins les actions suivantes :
- commander la rotation de la turbine, en fonction de conditions d'activation prédéterminées (information émanant par exemple de la pédale de frein),
- mesurer la pression dans le premier conduit **3,** au moyen du capteur de pression **22,**
- déterminer une différence entre la pression courante et une valeur de dépression de consigne prédéterminée **DPR,**
- ajuster les signaux de commande utilisés pour ajuster en puissance la vitesse de rotation de la turbine en fonction de ladite différence.

En fonction de la vitesse de rotation obtenue par la boucle d'asservissement, l'unité de commande est configurée pour estimer un niveau de colmatage du filtre ; en effet plus une vitesse de rotation obtenue par l'asservissement est élevée, plus le filtre est colmaté. À cet effet, l'unité de commande peut inclure une courbe de conversion voire un abaque.

On constate donc dans la pratique une élévation progressive de la vitesse de turbine obtenue en régulation ou asservissement comme ceci est illustré à la figure 7.

L'unité de commande est configurée pour détecter un niveau de colmatage prédéterminé du filtre, qui correspond dans la pratique à la nécessité prochaine de changer le filtre. Ceci est illustré sur la figure 7, où une alerte de colmatage est déterminée lorsque le la vitesse de turbine atteint la vitesse maximale admissible pour le moteur de la turbine ou bien que la dépression de consigne DPR ne peut pas être atteinte, même avec une commande maximale en puissance.

Selon une option, sous une telle condition, l'unité de commande est configurée pour transmettre un message à destination d'un utilisateur

Pour fixer les ordres de grandeur, la puissance consommée par la turbine 10 et son moteur électrique 11 peuvent aller de une trentaine de watts jusqu'à plus d'un kilowatt, en pratique cette puissance peut être comprise dans un intervalle [30W - 800W] selon le nombre de bouches d'aspiration à desservir et aussi selon la longueur des tuyauteries qui génèrent une légère perte de charge.

Dans une configuration, la vitesse de la turbine peut aller de 0 à 12 000 tr/s.

Dans une configuration, la vitesse de la turbine peut aller de 0 à 30 000 tr/s.

Le temps de réponse de la turbine pour aller de zéro à la vitesse de consigne peut être typiquement compris entre 100 ms et 700 ms, le plus souvent pour les applications automobiles entre 400 ms et 600 ms.

Sur la figure 3, nous trouvons un filtre centralisé, un capteur de pression centralisé, et des canalisations ou tuyauteries **31, 32, 33, 34** qui permettent de relier chacune des bouches d'aspiration **83** au filtre **2.**

On remarque qu'il peut y avoir plusieurs filtres desservis par une même turbine.

Sur la figure 9, la turbine 1 est interposée entre le premier conduit 3 et le filtre. La turbine aspire les particules puis la turbine les souffle dans le filtre via le conduit aval noté 3'. Dans ce cas, le filtre 2 est en surpression au lieu de dépression.

La logique de pilotage peut utiliser un capteur **22** mesurant la dépression dans le premier conduit et/ou un capteur auxiliaire **23** mesurant la surpression dans le conduit aval 3'. La consigne d'asservissement peut concerner l'un ou l'autre des capteurs voire une combinaison des deux.

Comme illustré à la figure 8, une variante prévoit la consigne d'asservissement ne soit pas une valeur fixe prédéterminée, mais plutôt plusieurs valeurs de consigne qui dépendent de la phase courante de la séquence de freinage.

La courbe notée **P3** représente la pression régnant à l'intérieur du premier conduit 3 c'est-à-dire substantiellement la pression d'aspiration appliquée à la bouche d'aspiration **83. T1** repère le début de la séquence de freinage alors que **T2** repère la fin de la séquence de freinage.

On peut ainsi prévoir trois consignes de dépression, une consigne standard notée **DPR1,** une consigne de dépression allégée notée **DPR2** est une consigne de dépression accrue notée **DPR3.**

La consigne de dépression accrue **DPR3** est sélectionnée par exemple en début de freinage et à la fin de la séquence de freinage. La consigne de dépression allégée **DPR2** est sélectionnée par exemple en milieu de la séquence de freinage.

Selon l'exemple représenté à la figure 8, au début du freinage, on applique une première dépression standard notée **DPR1,** pendant la phase intermédiaire de freinage, on applique la consigne de dépression allégée **DPR2,** et à la fin de la phase de freinage, on applique la consigne de dépression accrue **DPR3.** Selon une option, la consigne de dépression accrue est appliquée temporellement au-delà du relâchement du frein à friction dans une phase appelée phase de prolongement qui sert à nettoyer la bouche d'aspiration ainsi que le premier conduit des particules qui s'y trouvent.

## Revendications

1. Système d'aspiration des particules de freinage d'un système de freinage à friction, le système d'aspiration comprenant:
au moins une source de dépression (1), au moins une bouche d'aspiration (83), reliée par un circuit pneumatique à la source de dépression, une unité de commande (6) configurée pour commander la source de dépression,
**caractérisé en ce que** le système d'aspiration comprend en outre un dispositif de détermination des conditions aérauliques courantes prévalant dans le circuit pneumatique,
et **en ce que** l'unité de commande pilote la source de dépression de manière à ce que les conditions aérauliques courantes dans le circuit pneumatique atteignent ou tendent à rejoindre une valeur de conditions aérauliques de consigne.

2. Système selon la revendication 1, dans lequel le dispositif de détermination des conditions aérauliques courantes prévalant dans le circuit pneumatique est un capteur de pression (22) pour mesurer la pression régnant dans le circuit pneumatique et la pression représentant les conditions aérauliques courantes, et l'unité de commande pilote la source de dépression de manière à ce que la pression dans le circuit pneumatique atteigne ou tende à rejoindre une valeur de dépression de consigne prédéterminée (DPR).

3. Système selon l'une des revendications 1 à 2, dans lequel la source de dépression est formée par une turbine entrainée par un moteur électrique (11).

4. Système selon l'une des revendications 1 à 3, comprenant en outre au moins un filtre (2) pour collecter les particules aspirées.

5. Système selon la revendication 2 et la revendication 4, dans lequel le capteur de pression est agencé de manière adjacente ou intégrée au filtre.

6. Système selon l'une des revendications 1 à 4, tel que le système comprend un filtre et une turbine centralisés, reliés à quatre ou plus bouches d'aspiration.

7. Système selon l'une des revendications 1 à 4, tel que le système comprend un filtre et une turbine décentralisés, à savoir pour chaque bouche d'aspiration ou couple de bouches d'aspiration.

8. Système selon l'une des revendications 4 à 5, dans lequel l'unité de commande est configurée pour détecter un niveau de colmatage prédéterminé du filtre, et pour transmettre un message à destination d'un utilisateur.

9. Système selon l'une des revendications 1 à 8, dans laquelle la valeur de dépression de consigne prédéterminée (DPR) est choisie dans une plage de 20 à 40 millibars en dessous de la pression ambiante.

10. Procédé pour piloter un système d'aspiration des particules de freinage à friction d'un système de freinage d'un véhicule, le système d'aspiration comprenant:
au moins une source de dépression (une turbine ou autre), au moins une bouche d'aspiration (83) reliée par un circuit pneumatique à la source de dépression, une unité de commande (6), un dispositif de détermination des conditions aérauliques courantes prévalant dans le circuit pneumatique,
l'unité de commande est configurée pour :
**a-** commander la source de dépression (telle que la rotation de la turbine), en fonction de conditions d'activation prédéterminées,
**b-** mesurer des conditions aérauliques courantes prévalant dans le circuit pneumatique,
**c-** déterminer une différence entre conditions aérauliques courantes et au moins une valeur de conditions aérauliques de consigne,
**d-** ajuster les signaux de commande utilisés pour ajuster en puissance la source de pression, ou faire tourner la turbine en fonction de ladite différence.

11. Procédé selon la revendication 10, dans lequel le dispositif de détermination des conditions aérauliques courantes prévalant dans le circuit pneumatique est un capteur de pression (22) pour mesurer la pression régnant dans le circuit pneumatique, la pression représentant alors les conditions aérauliques courantes, et les étapes b- et c-deviennent alors :
**b-** mesurer la pression dans le circuit pneumatique, au moyen du capteur de pression,
**c-** déterminer une différence entre la pression courante et une valeur de dépression de consigne,

12. Procédé selon l'une des revendications 10 à 11, dans lequel l'unité de commande est en outre configurée pour détecter un niveau de colmatage prédéterminé du filtre, notamment quand la consigne de commande de la source de dépression dépasse un seuil prédéterminé pour que les conditions aérauliques courantes atteignent la valeur de conditions aérauliques de consigne prédéterminée.

13. Procédé selon l'une des revendications 10 à 12, dans lequel l'unité de commande est en outre configurée pour transmettre un message à destination d'un utilisateur, lorsqu'une condition de colmatage est déterminée.

14. Procédé selon l'une des revendications 10 à 12, dans lequel la source de pression est une turbine et dans lequel il est prévu que lorsque les signaux de commande utilisés pour faire tourner la turbine dépassent une valeur prédéterminée, le niveau sonore émis par la rotation de la turbine dépasse un certain seuil audible, et peut ainsi être perçu par un utilisateur.

## Patentansprüche

1. Absaugsystem von Bremsstaub eines Reibungsbremssystems, wobei das Absaugsystem umfasst:
mindestens eine Unterdruckquelle (1), mindestens eine Saugmündung (83), die durch eine pneumatische Leitungsanordnung mit der Unterdruckquelle verbunden ist, eine Steuereinheit (6), die ausgebildet ist, die Unterdruckquelle zu steuern,
**dadurch gekennzeichnet,**
**dass** das Absaugsystem ferner eine Einrichtung zum Ermitteln der in der pneumatischen Leitungsanordnung herrschenden Ist-Luftbedingungen umfasst,
und **dass** die Steuereinheit die Unterdruckquelle so steuert, dass die Ist-Luftbedingungen in der pneumatischen Leitungsanordnung einen Sollwert der Luftbedingungen erreichen oder diesen zu erlangen anstreben.

2. System nach Anspruch 1,
bei dem die Einrichtung zum Ermitteln der in der pneumatischen Leitungsanordnung herrschenden Ist-Luftbedingungen ein Drucksensor (22) zum Messen des in der pneumatischen Leitungsanordnung herrschenden Drucks und der Druck die Ist-Luftbedingungen repräsentiert und die Steuereinheit die Unterdruckquelle so steuert, dass der Druck in der pneumatischen Leitungsanordnung einen vorgegebenen Unterdruck-Sollwert (DPR) erreicht oder zu erlangen anstrebt.

3. System nach einem der Ansprüche 1 bis 2, bei dem die Unterdruckquelle durch eine von einem Elektromotor (11) angetriebene Turbine gebildet ist.

4. System nach einem der Ansprüche 1 bis 3, ferner umfassend mindestens ein Filter (2) zum Sammeln der aufgesaugten Staub.

5. System nach Anspruch 2 und Anspruch 4,
wobei der Drucksensor neben dem Filter angeordnet oder in diesem integriert ist.

6. System nach einem der Ansprüche 1 bis 4,
derart, dass das System ein zentrales Filter und eine zentrale Turbine umfasst, die mit vier oder mehr Saugmündungen verbunden sind.

7. System nach einem der Ansprüche 1 bis 4,
derart, dass das System ein dezentrales Filter und eine dezentrale Turbine umfasst, und zwar für jede Saugmündung oder jedes Saugmündungspaar.

8. System nach einem der Ansprüche 4 bis 5,
bei dem die Steuereinheit ausgebildet ist, einen vorbestimmten Zusetzgrad des Filters zu erkennen und eine Mitteilung an einen Benutzer zu übermitteln.

9. System nach einem der Ansprüche 1 bis 8,
bei dem der vorgegebene Unterdruck-Sollwert (DPR) in einem Bereich von 20 bis 40 Millibar unterhalb des Umgebungsdrucks gewählt ist.

10. Verfahren zum Steuern eines Absaugsystems von Bremsstaub eines Reibungsbremssystems eines Fahrzeugs, wobei das Absaugsystem umfasst:
mindestens eine Unterdruckquelle (eine Turbine oder anderes), mindestens eine Saugmündung (83), die durch eine pneumatische Leitungsanordnung mit der Unterdruckquelle verbunden ist, eine Steuereinheit (6), eine Einrichtung zum Ermitteln der Ist-Luftbedingungen, die in der pneumatischen Leitungsanordnung herrschen,
bei dem die Steuereinheit ausgebildet ist zum:
a- Steuern der Unterdruckquelle (wie zum Beispiel die Rotation der Turbine) in Abhängigkeit von vorgegebenen Betriebsbedingungen,
b- Messen der in der pneumatischen Leitungsanordnung herrschenden Ist-Luftbedingungen,
c- Bestimmen einer Differenz zwischen den Ist-Luftbedingungen und mindestens einem Sollwert der Luftbedingungen,
d- Anpassen der Steuersignale, die zum Anpassen der Leistung der Druckquelle oder zum Drehen der Turbine in Abhängigkeit von dieser Differenz verwendet werden.

11. Verfahren nach Anspruch 10,
bei dem die Einrichtung zur Bestimmung der Ist-Luftbedingungen, die in der pneumatischen Leitungsanordnung herrschen, ein Drucksensor (22) zur Messung des Druckes in der pneumatischen Leitungsanordnung ist, wobei der Druck die Ist-Luftbedingungen repräsentiert und die Schritte bund c- dann sind:
b- Messen des Drucks in der pneumatischen Leitungsanordnung mittels des Drucksensors,
c- Bestimmen einer Differenz zwischen dem Ist-Druck und einem Unterdruck-Sollwert.

12. Verfahren nach einem der Ansprüche 10 bis 11,
bei dem die Steuereinheit ferner ausgebildet ist, einen vorbestimmten Zusetzgrad des Filters zu erkennen, insbesondere wenn der Steuersollwert der Unterdruckquelle eine vorbestimmte Schwelle überschreitet, so dass die Ist-Luftbedingungen den vorgegebenen Sollwert der Luftbedingungen erreichen.

13. Verfahren nach einem der Ansprüche 10 bis 12,
bei dem die Steuereinheit ferner dazu ausgebildet ist, eine Mitteilung an einen Benutzer zu übermitteln, wenn ein Zusetzzustand festgestellt wird.

14. Verfahren nach einem der Ansprüche 10 bis 12,
bei dem die Druckquelle eine Turbine ist und bei dem vorgesehen ist, dass wenn die zum Drehen der Turbine verwendeten Steuersignale einen vorgegebenen Wert überschreiten, wobei der durch die Rotation der Turbine emittierte Schallpegel eine bestimmte hörbare Schwelle überschreitet und somit von einem Benutzer wahrgenommen werden kann.

## Claims

1. System for suctioning braking particles from a friction braking system, the suction system comprising:
at least one negative-pressure source (1), at least one suction mouth (83), connected by a pneumatic circuit to the negative-pressure source, and a control unit (6) configured to control the negative-pressure source,
**characterized in that** the suction system further comprises a device for determining the current airflow conditions prevailing in the pneumatic circuit,
and **in that** the control unit controls the negative-pressure source so that the current airflow conditions in the pneumatic circuit reach or tend to meet a setpoint for the airflow conditions.

2. System according to claim 1, wherein the device for determining the current airflow conditions prevailing in the pneumatic circuit is a pressure sensor (22) for measuring the pressure prevailing in the pneumatic circuit and the pressure representing the current airflow conditions, and the control unit controls the negative-pressure source so that the pressure in the pneumatic circuit reaches or tends to meet a predetermined negative-pressure setpoint (DPR).

3. System according to one of claims 1 to 2, wherein the negative-pressure source is formed by a turbine driven by an electric motor (11).

4. System according to one of claims 1 to 3, further comprising at least one filter (2) for collecting the suctioned particles.

5. System according to claim 2 and claim 4, wherein the pressure sensor is arranged adjacent or integrated with the filter.

6. System according to one of claims 1 to 4, such that the system comprises a centralized filter and turbine, which are connected to four or more suction mouths.

7. System according to one of claims 1 to 4, such that the system comprises a decentralized filter and turbine, namely for each suction mouth or pair of suction mouths.

8. System according to claim 4 or 5, wherein the control unit is configured to detect a predetermined level of clogging of the filter, and to transmit a message to a user.

9. System according to one of claims 1 to 8, wherein the predetermined negative-pressure setpoint (DPR) is selected within a range of 20 to 40 millibars below ambient pressure.

10. Method for controlling a system for suctioning friction braking particles from a braking system of a vehicle, the suction system comprising:
at least one negative-pressure source (a turbine or other), at least one suction mouth (83) connected by a pneumatic circuit to the negative-pressure source, a control unit (6), and a device for determining the current airflow conditions prevailing in the pneumatic circuit,
the control unit is configured for:
**a-** controlling the negative-pressure source the rotation of the turbine, according to predetermined activation conditions,
**b-** measuring the current airflow conditions prevailing in the pneumatic circuit,
**c-** determining a difference between current airflow conditions and at least one setpoint for the airflow conditions,
**d-** adjusting the control signals used, in order to adjust the power of the pressure source or to rotate the turbine as a function of said difference.

11. Method according to claim 10, wherein the device for determining the current airflow conditions prevailing in the pneumatic circuit is a pressure sensor (22) for measuring the pressure prevailing in the pneumatic circuit, the pressure then representing the current airflow conditions, and steps b- and c- then become:
**b-** measuring the pressure in the pneumatic circuit, by means of the pressure sensor,
**c-** determining a difference between the current pressure and a negative-pressure setpoint.

12. Method according to one of claims 10 to 11, wherein the control unit is further configured to detect a predetermined level of clogging of the filter, in particular when the control setpoint for the negative-pressure source exceeds a predetermined threshold, so that the current airflow conditions the pressure reach the value of the predetermined setpoint for the airflow conditions.

13. Method according to one of claims 10 to 12, wherein the control unit is further configured to transmit a message to a user when a clogging condition is determined.

14. Method according to one of claims 10 to 12, wherein the pressure source is a turbine and wherein it is provided that when the control signals used to cause the turbine to rotate exceed a predetermined value, the noise level emitted by rotation of the turbine exceeds a certain audible threshold, and can thus be perceived by a user.
